# EUROPEAN PATENT APPLICATION

(11) **EP 1 921 107 A2**
(43) Date of publication of application: **14.05.2008**
(21) Application number: 07020304.7
(22) Date of filing: 17.10.2007
(51) Int. Cl.: C08J 9/00

(54) **Method of modifying blowing agent**

(30) Priority: 17.10.2006 KR 20060100992
(71) Applicant: J & J Chemical Co., Seo-gu Incheon-city (KR)
(72) Inventor: Jo, Yong Yon, Siheung-city Gyeonggi-do (KR); Son, Heung Oh, Siheung-city Gyeonggi-do (KR)
(74) Representative: Böhm, Brigitte

(57) **Abstract**

Provided is a method of modifying a blowing agent including coating a metallic siloxylated compound or a silane compound on the surface of the blowing agent in a wet cake state. In the method of modifying a blowing agent, an operation of drying the blowing agent is omitted, and thus the method has effects of cost reduction and productivity improvement by simplifying the process. In addition, since the blowing agent prepared according to the present invention has excellent dispersibility in a resin, foam cells are uniformly formed and productivity can be improved. Since the fluidity of the resin is improved, productivity can be improved.

## Description

### CROSS-REFERENCE TO RELATED PATENT APPLICATION

This application claims the benefit of Korean Patent Application No. 10-2006-0100992, filed on October 17, 2006, in the Korean Intellectual Property Office, the disclosure of which is incorporated herein in its entirety by reference.

### BACKGROUND OF THE INVENTION

### 1. Field of the Invention

The present invention relates to a method of modifying a blowing agent, and more particularly, to a method of modifying a blowing agent having effects of cost reduction and productivity improvement by simplifying the process.

### 2. Description of the Related Art

Blowing agents, which are usually finely powdered compounds, are used to form foams such as thermoplastic resin foam. That is, the blowing agent is decomposed by heat and generates gases which forms pores within a resin to form foams.

Properties of cells of foams (foam cells), such as the size, distribution, and density, are determined by the properties of the blowing agent, and thus physical properties of the foams such as durability and tear strength are affected by the properties of foam cells. The size of the foam cells needs to be decreased, the number of foam cells per unit surface area needs to be increased, cell variation needs to be decreased, and the cells need to be uniformly distributed in order to have excellent physical properties such as durability and tear strength. Thus, the blowing agent has an important role on in the formation of foams having excellent physical properties.

Conventionally, a method of treating a blowing agent using a surface treating agent such as a coupling agent has been used to improve the properties. The coupling agent may be an aluminum-based coupling agent, a silane-based coupling agent or a titanium-based coupling agent. For example, Japanese Patent Publication No. 1992-320432 and Japanese Patent Publication No. 1994-179862 disclose a method of improving fluidity and dispersibility of a blowing agent in a resin by adding a silane coupling agent dissolved in a solvent to azo dicarbon amide. In addition, Japanese Patent Publication No. 1996-295872 discloses a method of improving fluidity and dispersibility of a blowing agent in a resin by adding an aluminum coupling agent dissolved in a solvent to a chemical blowing agent. Korean Patent Application No. 2005-0119375 discloses a method of improving properties of foams by adding a silane compound as an additive to a polymer resin in addition to a blowing agent during the formation of a polymer resin.

When a certain compound is added to a blowing agent in order to modify the blowing agent, the blowing agent is usually used in a dried powder form, thus an operation of drying the blowing agent is essential. Accordingly, the entire process takes loner time and manufacturing cost is increased.

### SUMMARY OF THE INVENTION

The present invention provides a method of modifying a blowing agent having effects of cost reduction and productivity improvement by simplifying the process,
wherein the modified blowing agent has excellent dispersibility and fluidity in a resin composition and uniform foam cells are formed from the resin composition.

According to an aspect of the present invention, there is provided a method of modifying a blowing agent comprising coating a metallic siloxylated compound or a silane compound on the surface of the blowing agent in a wet cake state.

The wet cake may include 15 to 25% of moisture based on the total weight of the wet cake.

The metallic siloxylated compound or the silane compound not being diluted is sprayed on the surface of the blowing agent.

The metallic siloxylated compound or the silane compound may have a viscosity of from 50 to 1,000 cP.

The metallic siloxylated compound may be one compound selected from the group consisting of compounds represented by Formulae 1 to 3. When the metallic siloxylated compound is represented by Formula 2 or 3, it has low viscosity.

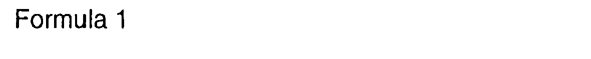

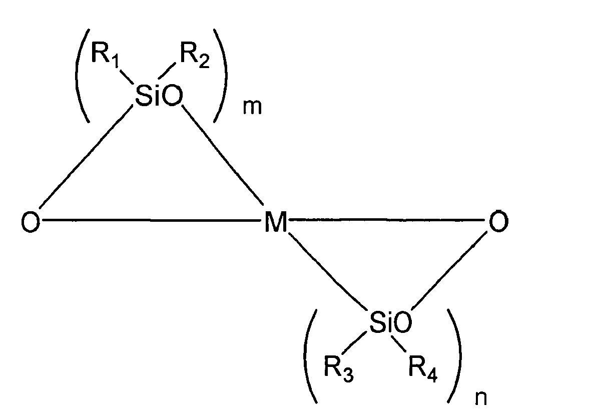

Here, m and n are each independently an integer of from 4 to 100,

M is a metal selected from the group consisting of aluminum, arsenic, gold, boron, barium, beryllium, bismuth, calcium, niobium, cadmium, cerium, cobalt, chrome, cesium, copper, iron, gallium, germanium, mercury, indium, potassium, lanthanum, lithium, magnesium, manganese, molybdenum, iridium, sodium, nickel, osmium, lead, palladium, platinum, rubidium, rhodium, ruthenium, antimony, silicon, tin, strontium, tantalum, tellurium, thorium, titanium, thallium, uranium, vanadium, tungsten, zinc and zirconium, and

R₁, R₂, R₃ and R₄ are each independently selected the group consisting of: a hydrogen atom; a halogen atom; -Si(R')(R")(R"'); a C₁~C₆ alkyl group substituted or unsubstituted with at least one of a halogen atom and -Si(R')(R")(R"'); a C₂~C₆ alkenyl group substituted or unsubstituted with at least one of a halogen atom and -Si(R')(R")(R"'); and a phenyl group substituted or unsubstituted with at least one of a halogen atom and -Si(R')(R")(R"'), wherein R', R" and R"' are each independently a C₁∼C₆ alkyl group; 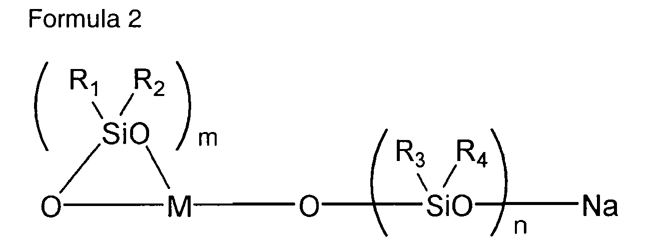 wherein m and n are each independently an integer of from 4 to 100,

M is a metal selected from the group consisting of aluminum, arsenic, gold, boron, barium, beryllium, bismuth, calcium, niobium, cadmium, cerium, cobalt, chrome, cesium, copper, iron, gallium, germanium, mercury, indium, potassium, lanthanum, lithium, magnesium, manganese, molybdenum, iridium, sodium, nickel, osmium, lead, palladium, platinum, rubidium, rhodium, ruthenium, antimony, silicon, tin, strontium, tantalum, tellurium, thorium, titanium, thallium, uranium, vanadium, tungsten, zinc and zirconium, and

R₁, R₂, R₃ and R₄ are each independently selected the group consisting of: a hydrogen atom; a halogen atom; -Si(R')(R")(R"'); a C₁~C₆ alkyl group substituted or unsubstituted with at least one of a halogen atom and -Si(R')(R")(R"'); a C₂∼C₆ alkenyl group substituted or unsubstituted with at least one of a halogen atom and -Si(R')(R")(R"'); and a phenyl group substituted or unsubstituted with at least one of a halogen atom and -Si(R')(R")(R"'), wherein R', R" and R"' are each independently a C₁~C₆ alkyl group; and 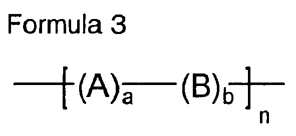 wherein
A is 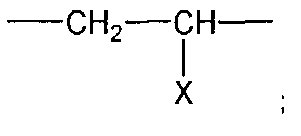
B is -CH₂-CH₂- ;
wherein X is CH₃(SiO-2CH₂-M)ₘ-, wherein m is an integer of from 4 to 100,

M is a metal selected from the group consisting of aluminum, arsenic, gold, boron, barium, beryllium, bismuth, calcium, niobium, cadmium, cerium, cobalt, chrome, cesium, copper, iron, gallium, germanium, mercury, indium, potassium, lanthanum, lithium, magnesium, manganese, molybdenum, iridium, sodium, nickel, osmium, lead, palladium, platinum, rubidium, rhodium, ruthenium, antimony, silicon, tin, strontium, tantalum, tellurium, thorium, titanium, thallium, uranium, vanadium, tungsten, zinc and zirconium,
each of the repeating units of A and B are randomly connected;
a and b are each independently 10 to 90 mol%; and
1 <n<1,000.

The amount of the metallic siloxylated compound may be from 0.1 to 10 parts by weight based on 100 parts by weight of the blowing agent.

The silane compound may be at least one compound selected from the group consisting of an ester-based silane, a vinyl-based silane, a methacryloxy silane, an epoxy-based silane, a sulfur-based silane and an amino-based silane.

The amount of the silane compound may be from 0.1 to 10 parts by weight based on 100 parts by weight of the blowing agent.

The blowing agent may be at least one selected from the group consisting of azo dicarbon amide, p,p'-oxybis(benzenesulfonyl hydrazide), p-toluenesulfonyl hydrazide, benzenesulfonyl hydrazide, N,N'-dinitroso pentamethylene tetramine, p-toluenesulfonyl semicarbazide, 5-phenyltetrazol, sodium bicarbonate, zinc dibenzenesulfinate and zinc ditoluenesulfinate.

The method may further include mixing fumed silica with the blowing agent coated with the metallic siloxylated compound or the silane compound.

In the method of modifying a blowing agent according to the present invention, an operation of drying the blowing agent is omitted, and thus the method has effects of cost reduction and productivity improvement by simplifying the process. In addition, since the blowing agent prepared according to the present invention has excellent dispersibility in a resin, foam cells are uniformly formed and productivity can be improved. Since the fluidity of the resin is improved, productivity can be improved.

### BRIEF DESCRIPTION OF THE DRAWINGS

The above and other features and advantages of the present invention will become more apparent by describing in detail exemplary embodiments thereof with reference to the attached drawings in which:
FIG. 1 schematically shows a flow diagram of a conventional method of modifying a blowing agent; and
FIG. 2 schematically shows a flow diagram of a method of modifying a blowing agent according to an embodiment of the present invention.

### DETAILED DESCRIPTION OF THE INVENTION

Hereinafter, a method of modifying a blowing agent according to the present invention will now be described more fully with reference to the accompanying drawings, in which exemplary embodiments of the invention are shown.

As described above, a method of modifying a blowing agent includes coating a metallic siloxylated compound or a silane compound on the surface of the blowing agent in a wet cake state.

The wet cake may include 15 to 25% of moisture based on the total weight of the wet cake. When the amount of the moisture of the blowing agent in the wet cake state is less than 15%, dehydration process takes too long time. On the other hand, when the amount of the moisture is greater than 25%, drying process cannot be smoothly performed.

Conventionally, when a blowing agent is modified by adding a certain compound, the blowing agent powder is dried, and then the compound is added to the dried powder. In order to maintain the dried state of the blowing agent, a blowing agent is treated with a surface-treating agent removing moisture according to Japanese Patent Publication No. 1999-246844. Meanwhile, when a blowing agent in a wet cake state is used according to the present invention, a metallic siloxylated compound or a silane compound which is more affinitive to the blowing agent than moisture is adhered to the surface of the blowing agent while moisture is evaporated. Here, when the metallic siloxylated compound or silane compound is used with a solvent, they cannot be uniformly dispersed on the surface of the blowing agent due to repulsive force between the solvent and water.

Since the blowing agent in a wet cake state can be used in the method of modifying a blowing agent according to the present invention, a process of drying the blowing agent can be omitted. Accordingly, the process can be simplified compared to conventional methods of modifying the blowing agent, and thus manufacturing costs can be reduced and productivity can be improved.

The metallic siloxylated compound or the silane compound may not be diluted in a solvent and sprayed on the surface of the blowing agent as it is.

In addition, the metallic siloxylated compound or the silane compound has a low molecular weight. The metallic siloxylated compound or silane compound is suitable to be directly sprayed on the surface of the blowing agent due to low viscosity since a low molecular weight metallic siloxylated compound or silane compound is used. The metallic siloxylated compound or the silane compound may have a viscosity of from 50 to 1,000 cP.

The metallic siloxylated compound may be one compound selected from the group consisting of compounds represented by Formulae 1 to 3: 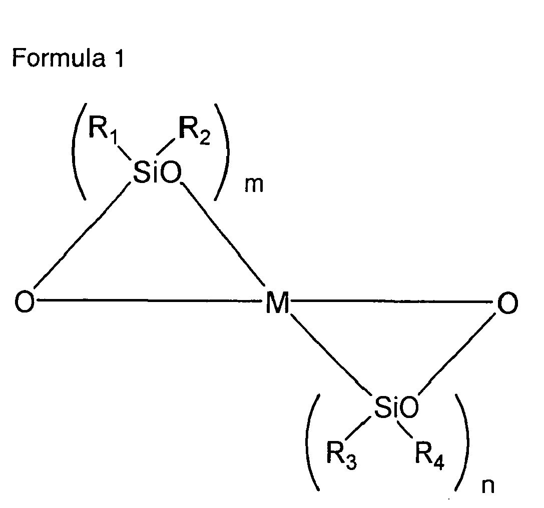 wherein m and n are each independently an integer of from 4 to 100,

M is a metal selected from the group consisting of aluminum, arsenic, gold, boron, barium, beryllium, bismuth, calcium, niobium, cadmium, cerium, cobalt, chrome, cesium, copper, iron, gallium, germanium, mercury, indium, potassium, lanthanum, lithium, magnesium, manganese, molybdenum, iridium, sodium, nickel, osmium, lead, palladium, platinum, rubidium, rhodium, ruthenium, antimony, silicon, tin, strontium, tantalum, tellurium, thorium, titanium, thallium, uranium, vanadium, tungsten, zinc and zirconium, and

R₁, R₂, R₃ and R₄ are each independently selected the group consisting of: a hydrogen atom; a halogen atom; -Si(R')(R")(R"'); a C₁~C₆ alkyl group substituted or unsubstituted with at least one of a halogen atom and -Si(R')(R")(R"'); a C₂~C₆ alkenyl group substituted or unsubstituted with at least one of a halogen atom and -Si(R')(R")(R"'); and a phenyl group substituted or unsubstituted with at least one of a halogen atom and -Si(R')(R")(R"'), wherein R', R" and R"' are each independently a C₁~C₆ alkyl group. 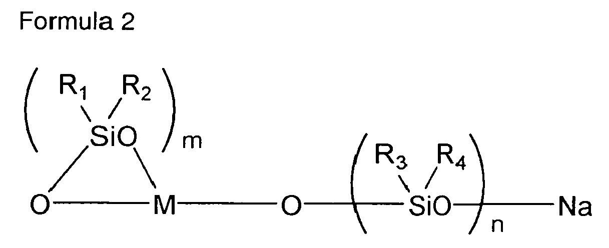 wherein m and n are each independently an integer of from 4 to 100,

M is a metal selected from the group consisting of aluminum, arsenic, gold, boron, barium, beryllium, bismuth, calcium, niobium, cadmium, cerium, cobalt, chrome, cesium, copper, iron, gallium, germanium, mercury, indium, potassium, lanthanum, lithium, magnesium, manganese, molybdenum, iridium, sodium, nickel, osmium, lead, palladium, platinum, rubidium, rhodium, ruthenium, antimony, silicon, tin, strontium, tantalum, tellurium, thorium, titanium, thallium, uranium, vanadium, tungsten, zinc and zirconium, and

R₁, R₂, R₃ and R₄ are each independently selected the group consisting of: a hydrogen atom; a halogen atom; -Si(R')(R")(R"'); a C₁~C₆ alkyl group substituted or unsubstituted with at least one of a halogen atom and -Si(R')(R")(R"'); a C₂~C₆ alkenyl group substituted or unsubstituted with at least one of a halogen atom and -Si(R')(R")(R"'); and a phenyl group substituted or unsubstituted with at least one of a halogen atom and -Si(R')(R")(R"'), wherein R', R" and R"' are each independently a C₁~C₆ alkyl group. 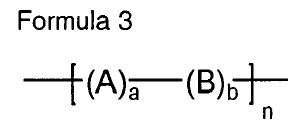 wherein,
A is 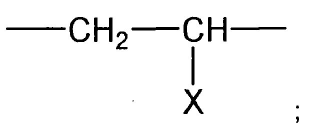 B is -CH₂-CH₂- ;
wherein X is CH₃(SiO-2CH₂-M)ₘ-, wherein m is an integer of from 4 to 100,

M is a metal selected from the group consisting of aluminum, arsenic, gold, boron, barium, beryllium, bismuth, calcium, niobium, cadmium, cerium, cobalt, chrome, cesium, copper, iron, gallium, germanium, mercury, indium, potassium, lanthanum, lithium, magnesium, manganese, molybdenum, iridium, sodium, nickel, osmium, lead, palladium, platinum, rubidium, rhodium, ruthenium, antimony, silicon, tin, strontium, tantalum, tellurium, thorium, titanium, thallium, uranium, vanadium, tungsten, zinc and zirconium,
each of the repeating units of A and B are randomly connected;
a and b are each independently 10 to 90 mol%; and
1 <n<1,000.

The amount of the metallic siloxylated compound may be 0.1 to 10 parts by weight based on 100 parts by weight of the blowing agent. When the amount of the metallic siloxylated compound is less than 0.1 parts by weight based on 100 parts by weight of the blowing agent, effects of improving properties are negligible. On the other hand, when the amount of the metallic siloxylated compound is greater than 10 parts by weight, a melting index (MI) of a resin is excessively varied and viscosity is increased, and thus fluidity of the modified blowing agent may be decrease.

The silane compound may be at least one compound selected from the group consisting of an ester-based silane, a vinyl-based silane, a methacryloxy silane, an epoxy-based silane, a sulfur-based silane and an amino-based silane.

The amount of the silane compound may be from 0.1 to 10 parts by weight based on 100 parts by weight of the blowing agent. When the amount of the silane compound is less than 0.1 parts by weight based on 100 parts by weight of the blowing agent, effects of improving properties are negligible. On the other hand, when the amount of the silane compound is greater than 10 parts by weight, manufacturing costs can be increased more than the effect improvement, and properties can be decreased since the degree of cross-linking of the resin is affected.

Any known blowing agent in the art can be used as the blowing agent used to prepared the modified blowing agent without limitation. In particular, an organic and inorganic chemical blowing agent can be used, and examples of the blowing agent is azo dicarbon amide, p,p'-oxybis(benzenesulfonyl hydrazide), p-toluenesulfonyl hydrazide, benzenesulfonyl hydrazide, N,N'-dinitroso pentamethylene tetramine, p-toluenesulfonyl semicarbazide, 5-phenyltetrazol, sodium bicarbonate, zinc dibenzenesulfinate and zinc ditoluenesulfinate. The blowing agent can be used alone or in a combination of one or more.

The method may further include mixing fumed silica with the blowing agent coated with the metallic siloxylated compound or the silane compound. The fumed silica is a porous inorganic material having particle shape in order to enlarge the surface area. When the blowing agent coated with the metallic siloxylated compound or the silane compound is modified by adding the fumed silica, fluidity of the modified blowing agent is increased and prevention of caking can be improved.

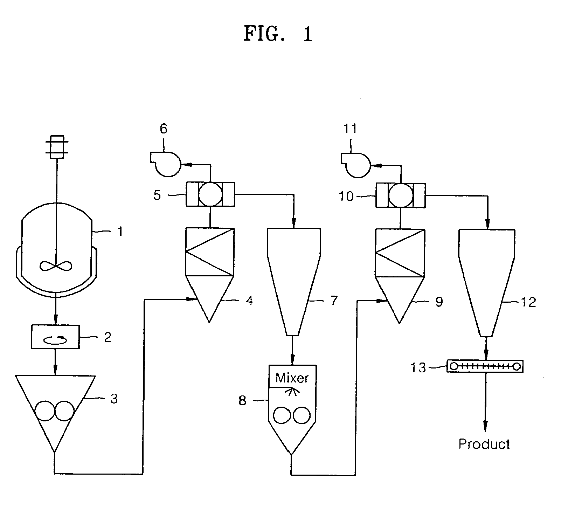

Hereinafter, a method of modifying a blowing agent will be described in detail with reference to the drawings. FIG. 1 schematically shows a flow diagram of a conventional method of modifying a blowing agent including a drying process. The method is as follows.

A blowing agent prepared in a reactor 1 was formed in a wet cake state having a moisture of about 15 to 25% through a centrifugal dehydrator 2, and the blowing agent in the wet cake state is supplied into a dryer 4 through a feeding hopper 3. The residual moisture of the blowing agent is reduced to less than 1 % using a filter 5 in the dryer 4, and the dried blowing agent powder is supplied into a hopper 7. The dried blowing agent powder is supplied into a mixer 8 from the hopper 7, and a compound to be mixed with the blowing agent powder to modify the blowing agent is supplied into the mixer 8 through a spray disposed in the mixer 8, and mixed with the dried blowing agent powder. The resultant mixture was dried in a dryer 9 to form a powder and passed through a screen 13 to obtain a modified blowing agent.

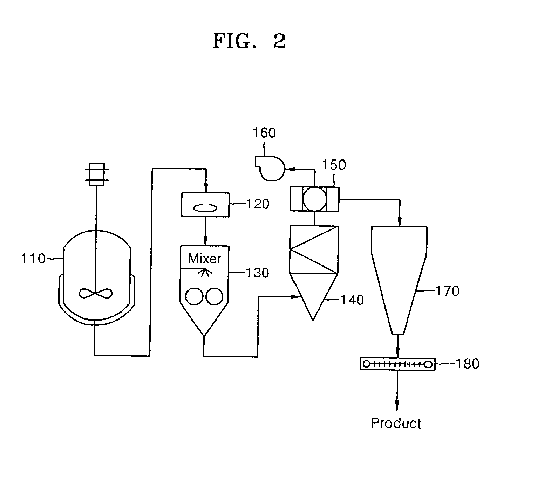

Meanwhile, a method of modifying a blowing agent using a blowing agent in a wet cake state according to an embodiment of the present invention is shown in FIG. 2. Hereinafter, a method of modifying a blowing agent including simplified process according to an embodiment of the present invention will be described in detail with reference to FIG. 2.

A blowing agent prepared in a reactor 110 was formed in a wet cake state having a moisture of about 15 to 25% through a centrifugal dehydrator 120, and the blowing agent in the wet cake state, as it is, is supplied into a mixer 130. A metallic siloxylated compound or a silane compound is supplied into the mixer 130 through a spray disposed in the mixer 130 to be coated on the surface of the blowing agent in the wet cake state. The resultant mixture was dried in a dryer 140 and passed through a screen 180 to obtain a modified blowing agent.

As described above, according to FIG. 2, an operation of drying the prepared blowing agent which corresponds to the operation from the feeding hopper 3 to the hopper 7 in FIG. 1 is omitted.

The present invention will now be described in greater detail with reference to the following examples. The following examples are for illustrative purposes only and are not intended to limit the scope of the invention.

### Example

### Comparative Example 1

Untreated pure azo dicarbon amide powder having an average particle diameter of 15 µm was prepared.

### Comparative Example 2

0.4 g of trimethoxysilane (GE Company) as a silane-based coupling agent was sprayed and mixed with 100 g of the azo dicarbon amide powder used in Comparative Example 1. Here, the azo dicarbon amide was used in powder form prepared by a drying operation as in conventional processes. The resultant mixture was dried as in FIG. 1 and passed through a sieve to obtain a powder sample.

### Comparative Example 3

0.4 g of 100MS28 (Silochem CO.LTD) was mixed with 100 g of the azo dicarbon amide powder used in Comparative Example 1 using a conventional process as in Comparative Example 2 to obtain a powder sample.

### Example 1

0.4 g of trimethoxysilane (GE Company) as a silane-based coupling agent was sprayed and coated on 100 g of azo dicarbon amide in a wet cake state as a blowing agent as in FIG. 2. The resultant was dried and passed through a sieve to obtain a modified azo dicarbon amide powder sample.

### Example 2

0.4 g of 100MSM28 (Silochem CO.LTD) which is represented by Formula 1 (wherein R₁, R₂, R₃ and R₄ are hydrogen atoms, and M is boron) and has a molecular weight of about 15,000 and viscosity of about 350 cP as a metallic siloxylated compound was sprayed and coated on 100 g of the azo dicarbon amide powder in a wet cake state as a blowing agent as in FIG. 2. The resultant mixture was dried and passed through a sieve to obtain a modified azo dicarbon amide powder sample.

### Measurement of Physical Properties

Properties of samples obtained in Examples 1 and 2 and Comparative Examples 1 to 3 were measured using the following methods.

### 1) Decomposition Properties

A decomposition temperature (GT) and decomposition speed (DS) of the blowing agent powder and a volume of gas (GV) generated during the decomposition were measured at 195°C using a decomposition temperature measuring device produced by Cell Techno (Japan) (Model No.: FI-99□ S□ Q1-37).

In order to measure the DT, test initiating temperatures suitable for each of the samples were set by referring to test initiating temperatures listed in the test standard index of blowing agents (DJO-SPR-Q1-01, -02). A heating bath was heated at a constant heating rate, a sample of the blowing agent was weighed, and the weighed sample was heated and decomposed in the heating bath. A temperature and generated gas were measured after 30 seconds, and a temperature at which the amount of generated gas reaches 100 ml/gr is regarded as the decomposition temperature.

The amount of decomposed gas was measured by heating the sample to a temperature prescribed in the test standard index of blowing agents (DJO-SPR-Q1-01, -02).

The decomposition speed was measured by placing a test tube in the heating bath in the same manner as in the test of the decomposition temperature, sealing the test tube after 30 seconds, and measuring variation of the amount of gas at every 30 seconds. The results are shown in Table 1.

### 2) Angle of Repose

Angle of repose is an angle formed between the horizontal plane and the plane of inclination of pile of granular materials at which the granular materials come to rest. The angle of repose increases with increasing roughness and nonuniformity of the surface of the granule. Thus, a small angle of repose indicates excellent fluidity of powder.

Angle of repose of the blowing agent powder prepared in Examples 1 and 2 and Comparative Examples 1 to 3 was measured using a powder tester (Hosokawa Micron Ltd., Product No.: FI-93□ S□ Q1-25, Model No.: PT-N).

### 3) Melt Flow Test

21 g of each of the blowing agent samples obtained in Examples 1 and 2 and Comparative Examples 1 to 3 was mixed with 100 g of low-density polyethylene (Hanwha Chemical Corporation, Product No.: PE 5316) using a heating-roller at 120°C, and a sheet of the mixture was molded using a press mold at 130°C. Melt flow test of the formed sheets was performed.

That is, melt flow of sheets prepared using the blowing agent of Examples 1 and 2 and Comparative Examples 1 to 3 was measured using a plastometer (Tinius Olesen Ltd., Model No.: MT 600) under 10.76 Kg load at 125°C.

### 4) Foam test

A sheet was prepared in the same manner as the sheet used to measure the melt flow was prepared, except that 21 g of each of the blowing agent samples was mixed with 100 g of low-density polyethylene (Hanwha Chemical Corporation, Product No.: PE 5316), and 0.9 g of dicumyl peroxide (DCP) as a chemical cross-linking agent was further added thereto. Foam test was performed by foaming the prepared sheet in an oven at 210°C.

The size of foam cells prepared in Examples 1 and 2 and Comparative Examples 1 to 3, cell size variation, and the number of cells per unit surface area were measured.

The results are shown in Table 1.

**Table 1**

| | Decomposition properties | | | Angle of repose(°) | Melt flow (g/10sec.) | Blowing test | | |
|---|---|---|---|---|---|---|---|---|
| | DT(°C) | GV(ml/g) | DS(sec.) | | | Cell size (mm) | Cell size variation | No. of cells per 1cm² |
| Comparative Example 1 | 210 | 232 | 750 | 50.0 | 0.754 | 0.728 | 5.97×10⁻² | 240 |
| Comparative Example 2 | 209 | 232 | 742 | 46.2 | 0.750 | 0.688 | 2.12×10⁻² | 269 |
| Comparative Example 3 | 209 | 232 | 744 | 48.3 | 0.868 | 0.632 | 3.30×10⁻³ | 319 |
| Example 1 | 210 | 230 | 746 | 45.8 | 0.760 | 0.690 | 3.61×10⁻² | 268 |
| Example 2 | 209 | 230 | 744 | 48.0 | 0.871 | 0.612 | 2.93×10⁻³ | 340 |

As shown in Table 1, the modified blowing agents prepared in Examples 1 and 2 according to the present invention have equal level of decomposition properties and lower level of angle of repose compared to the blowing agents prepared by the conventional process as in Comparative Examples 1 to 3. The results indicate that the modified blowing agents of Examples 1 and 2 have equal or improved level of fluidity when compared to the known blowing agents. The melt flow of the polymer resin composition including the modified blowing agent prepared in Examples 1 and 2 according to the present invention was equal to the melt flow of the polymer resin composition including samples prepared in Comparative Examples 1 to 3. In addition, the results of the foam test using samples prepared in Example 1 and 2 was similar to the results using samples prepared in Comparative Example 1 to 3. Therefore, even if the process of modifying a blowing agent is simplified by using the blowing agent in a wet cake state, physical properties of the blowing agent are not deceased.

As described above, in the method of modifying a blowing agent according to the present invention, an operation of drying the blowing agent is omitted, and thus the method has effects of cost reduction and productivity improvement by simplifying the process. In addition, since the blowing agent prepared according to the present invention has excellent dispersibility in a resin, foam cells are uniformly formed and productivity can be improved. Since the fluidity of the resin is improved, productivity can be improved.

While the present invention has been particularly shown and described with reference to exemplary embodiments thereof, it will be understood by those of ordinary skill in the art that various changes in form and details may be made therein without departing from the spirit and scope of the present invention as defined by the following claims.

Provided is a method of modifying a blowing agent including coating a metallic siloxylated compound or a silane compound on the surface of the blowing agent in a wet cake state. In the method of modifying a blowing agent, an operation of drying the blowing agent is omitted, and thus the method has effects of cost reduction and productivity improvement by simplifying the process. In addition, since the blowing agent prepared according to the present invention has excellent dispersibility in a resin, foam cells are uniformly formed and productivity can be improved. Since the fluidity of the resin is improved, productivity can be improved.

## Claims

1. A method of modifying a blowing agent comprising coating a metallic siloxylated compound or a silane compound on the surface of the blowing agent in a wet cake state.

2. The method of claim 1, wherein the wet cake comprises 15 to 25% of moisture based on the total weight of the wet cake.

3. The method of claim 1, wherein the metallic siloxylated compound or the silane compound not being diluted is sprayed on the surface of the blowing agent.

4. The method of claim 1, wherein the metallic siloxylated compound or the silane compound has a viscosity of from 50 to 1,000 cP.

5. The method of claim 1, wherein the metallic siloxylated compound is one compound selected from the group consisting of compounds represented by Formulae 1 to 3: 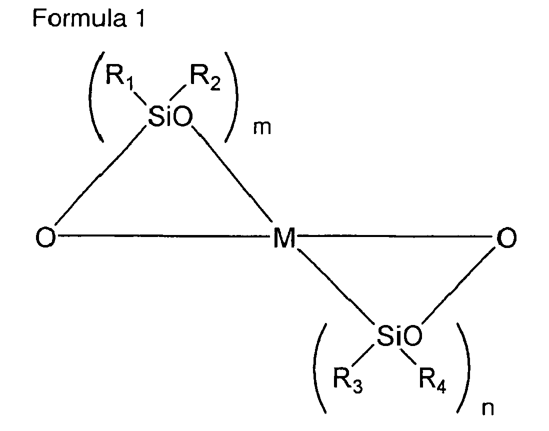 wherein m and n are each independently an integer of from 4 to 100,
M is a metal selected from the group consisting of aluminum, arsenic, gold, boron, barium, beryllium, bismuth, calcium, niobium, cadmium, cerium, cobalt, chrome, cesium, copper, iron, gallium, germanium, mercury, indium, potassium, lanthanum, lithium, magnesium, manganese, molybdenum, iridium, sodium, nickel, osmium, lead, palladium, platinum, rubidium, rhodium, ruthenium, antimony, silicon, tin, strontium, tantalum, tellurium, thorium, titanium, thallium, uranium, vanadium, tungsten, zinc and zirconium, and
R₁, R₂, R₃ and R₄ are each independently selected the group consisting of: a hydrogen atom; a halogen atom; -Si(R')(R")(R"'); a C₁~C₆ alkyl group substituted or unsubstituted with at least one of a halogen atom and -Si(R')(R")(R"'); a C₂~C₆ alkenyl group substituted or unsubstituted with at least one of a halogen atom and -Si(R')(R")(R"'); and a phenyl group substituted or unsubstituted with at least one of a halogen atom and -Si(R')(R")(R"'), wherein R', R" and R"' are each independently a C₁~C₆ alkyl group; 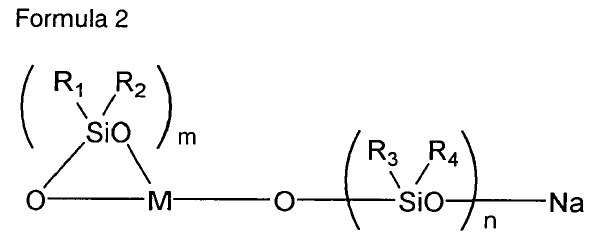 wherein m and n are each independently an integer of from 4 to 100,
M is a metal selected from the group consisting of aluminum, arsenic, gold, boron, barium, beryllium, bismuth, calcium, niobium, cadmium, cerium, cobalt, chrome, cesium, copper, iron, gallium, germanium, mercury, indium, potassium, lanthanum, lithium, magnesium, manganese, molybdenum, iridium, sodium, nickel, osmium, lead, palladium, platinum, rubidium, rhodium, ruthenium, antimony, silicon, tin, strontium, tantalum, tellurium, thorium, titanium, thallium, uranium, vanadium, tungsten, zinc and zirconium, and
R₁, R₂, R₃ and R₄ are each independently selected the group consisting of: a hydrogen atom; a halogen atom; -Si(R')(R")(R"'); a C₁~C₆ alkyl group substituted or unsubstituted with at least one of a halogen atom and -Si(R')(R")(R"'); a C₂∼C₆ alkenyl group substituted or unsubstituted with at least one of a halogen atom and -Si(R')(R")(R"'); and a phenyl group substituted or unsubstituted with at least one of a halogen atom and -Si(R')(R")(R"'), wherein R', R" and R"' are each independently a C₁~C₆ alkyl group; and 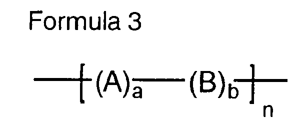 wherein
A is 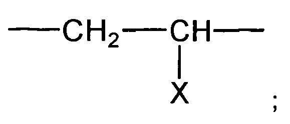 B is -CH₂-CH₂- ;
wherein X is CH₃(SiO-2CH₂-M)ₘ-, wherein m is an integer of from 4 to 100,
M is a metal selected from the group consisting of aluminum, arsenic, gold, boron, barium, beryllium, bismuth, calcium, niobium, cadmium, cerium, cobalt, chrome, cesium, copper, iron, gallium, germanium, mercury, indium, potassium, lanthanum, lithium, magnesium, manganese, molybdenum, iridium, sodium, nickel, osmium, lead, palladium, platinum, rubidium, rhodium, ruthenium, antimony, silicon, tin, strontium, tantalum, tellurium, thorium, titanium, thallium, uranium, vanadium, tungsten, zinc and zirconium,
each of the repeating units of A and B are randomly connected;
a and b are each independently 10 to 90 mol%; and
1 <n<1,000.

6. The method of claim 1, wherein the amount of the metallic siloxylated compound is from 0.1 to 10 parts by weight based on 100 parts by weight of the blowing agent.

7. The method of claim 1, wherein the silane compound is at least one compound selected from the group consisting of an ester-based silane, a vinyl-based silane, a methacryloxy silane, an epoxy-based silane, a sulfur-based silane and an amino-based silane.

8. The method of claim 1, wherein the amount of the silane compound is from 0.1 to 10 parts by weight based on 100 parts by weight of the blowing agent.

9. The method of claim 1, wherein the blowing agent is at least one selected from the group consisting of azo dicarbon amide, p,p'-oxybis(benzenesulfonyl hydrazide), p-toluenesulfonyl hydrazide, benzenesulfonyl hydrazide, N,N'-dinitroso pentamethylene tetramine, p-toluenesulfonyl semicarbazide, 5-phenyltetrazol, sodium bicarbonate, zinc dibenzenesulfinate and zinc ditoluenesulfinate.

10. The method of claim 1, further comprising mixing fumed silica with the coated blowing agent.
